# EUROPEAN PATENT APPLICATION

(11) **EP 3 226 213 A1**
(43) Date of publication of application: **04.10.2017**
(21) Application number: 16162660.1
(22) Date of filing: 29.03.2016
(51) Int. Cl.: G06T 19/00

(54) **METHOD OF COMPUTATIONALLY AUGMENTING A VIDEO FEED, DATA-PROCESSING APPARATUS, AND COMPUTER PROGRAM THEREFOR**

(71) Applicant: Judex, Roland, 74722 Buchen (DE)
(72) Inventor: Judex, Roland, 74722 Buchen (DE)
(74) Representative: Meyer zu Bexten, Elmar

(57) **Abstract**

**Problem**

---It is an object of the invention to enhance a video feed, such as may be provided on an arbitrary video-sharing website, by providing the viewer with an experience comparable to visiting an artistic engagement ("gig") or other event.

**Solution**

The problem is solved by mapping the video feed onto a virtual stage setting), spatially modeling a virtual audience (i, j1...n) representing recipients (i, j1...n) of the video feed, assembling a perceptual scene comprising the virtual stage setting and audience (i, j1...n), and rendering the scene for visual display to a viewer (i) among the recipients (i, j1...n).

## Description

### Technical Field

The invention pertains to the technical discipline of human-computer interaction. More specifically, the invention pertains to the field of mixed reality.

### Background Art

Humans interact with computers in many ways; and the interface between humans and the computers they use is crucial to facilitating this interaction. Desktop applications, internet browsers, handheld computers, and computer kiosks make use of the graphical user interfaces (GUI) prevalent in the art.

In the context of human-computer interaction (HCl), mixed reality (MR), sometimes referred to as hybrid reality, refers to various user interface techniques wherein real and virtual worlds are merged to produce new environments and visualizations. In particular, MR is considered to encompass the augmented reality (AR) and augmented virtuality (AV) subdomains of the virtuality continuum (VC), a concept laid out in MILGRAM, Paul, et al. A Taxonomy of Mixed Reality Visual Displays. - Section J: (D) IEICE trans. inf. syst.. December 1994, vol.E77-D, no.12, p.1321-1329.

Application US 2011164116 A (DISNEY ENTPR INC [US]) 07.07.2011 provides a system and method for integrating a virtual rendering system and a video capture system using flexible camera control to provide an augmented reality. There is provided a method for integrating a virtual rendering system and a video capture system for outputting a composite render to a display, the method comprising obtaining, from the virtual rendering system, a virtual camera configuration of a virtual camera in a virtual environment, programming the video capture system using the virtual camera configuration to correspondingly control a robotic camera in a real environment, capturing a video capture feed using the robotic camera, obtaining a virtually rendered feed using the virtual camera, rendering the composite render by processing the feeds, and outputting the composite render to the display.

### Summary of invention

The invention aims to provide a method of augmenting a video feed or events for enhanced entertainment of users and fans.

### Technical Problem

---It is an object of the invention to enhance a video feed, such as may be provided on an arbitrary video-sharing website, by providing the viewer with an experience comparable to visiting an artistic engagement ("gig") or other event.

### Solution to Problem

The problem is solved by a method as recited in Claim 1.

### Advantageous effect of invention

By visualizing a multitude of viewers, an embodiment of the invention conveys the experience of visiting a stage performance, sports event, or other shows in the field of entertainment, education and business.

### Brief description of drawings

Figure 1 shows a virtual stage setting reminiscent of a cinematic screen.
Figure 2 shows a virtual venue comprising the stage setting.
Figure 3 shows a scene comprising the stage setting and audience.
Figure 4 shows the scene augmented by miscellaneous points of interest.
Figure 5 shows a variety of pictorial representations of recipients.
Figure 6 shows a sample array of icons conveying the gender, social relationship, and access mode of co-recipients.

### Description of embodiments

A preferred embodiment may take the form of a smartphone app providing a GUI. It is well understood that the proposed method may be performed by means of a web browser, video game console, or other apparatus without departing from the scope of the invention.

In the present example, the app is connected to a video hosting service feeding a user-generated or corporate media video, audio stream, still image, and/or three-dimensional content of a recorded or live streaming. Suitable technologies such as WebM, H.264, MPEG-4 Part 10 Advanced Video Coding (MPEG-4 AVC), or JPEG are well known throughout the art and standardized, for instance, according to ISO/IEC 14496-10.

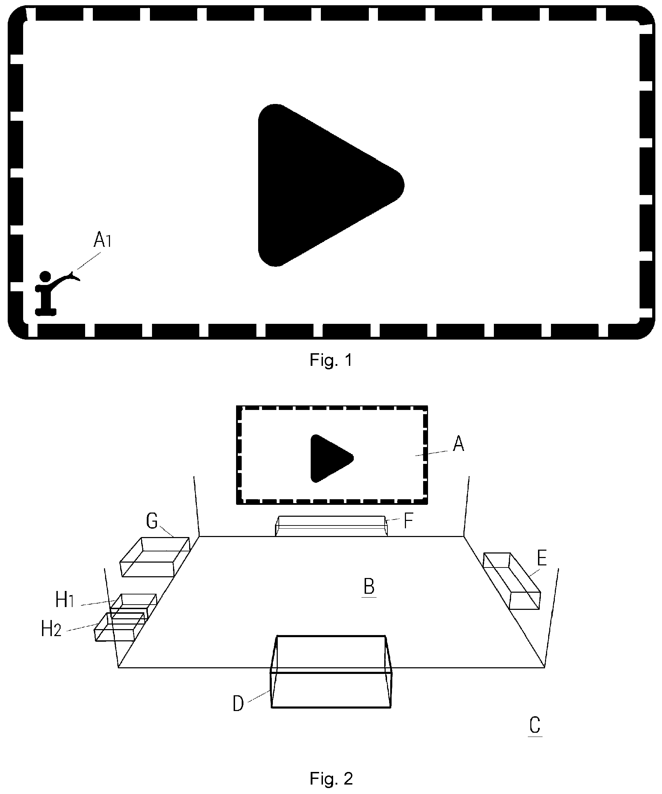

Instead of activating the used content directly on a canvas or other interface display component, the app or a Web code (scripting library) maps the feed onto the stage setting of a virtual venue whose layout may or may not coincide with the architecture of the actual venue where the captured performance is taking - or has originally taken - place. Specifically, the setting could take the form of a stylized "projection screen", as depicted in Figure 1, for the streamed or previously downloaded main content. Herein, the projected content may be statically overlaid by a logo (A1) of the content or infrastructure provider, as is common practice in the field of television broadcasting, video-implemented websites and other.

In addition to the essential stage setting (A), the venue (A, B, C, D, E, F, G, H1, H2) comprises further virtual facilities (B, C, D, E, F, G, H1, H2) and contents such as indoor (B) and outdoor sections (C), an entry zone (D), retail store (E), backstage (F), lounge (G), or even separate ladies' and men's rooms (H1, H2) as suggested in Figure 2. These and other facilities may be arranged in a preconfigured or random spatial relation to each other, the central stage (A), and additional contents.

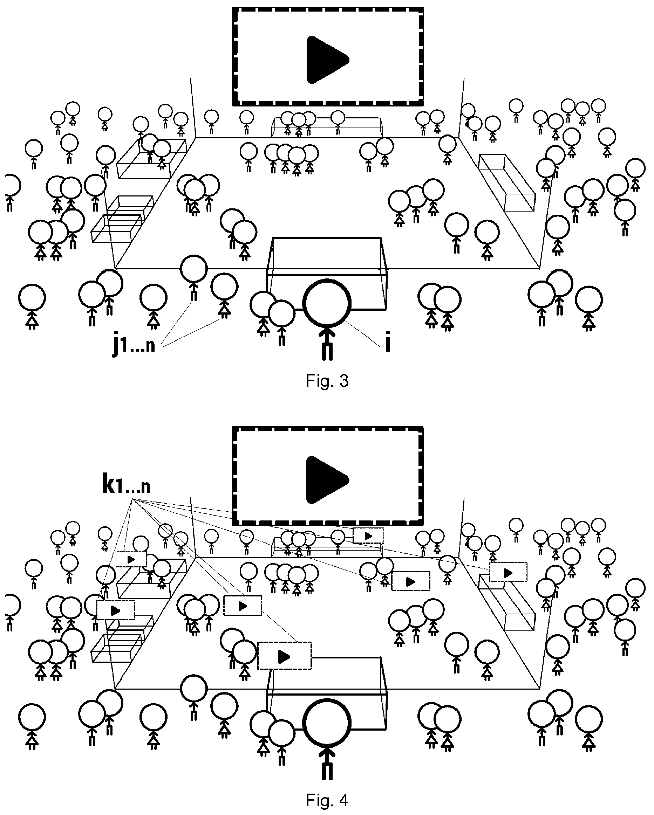

Imitating the immersive experience of a real-world entertainment event, the app, the scripting library - or the upstream server itself - further models a virtual audience (i, j1...n) based on the registered or otherwise known spectators of the used main content currently on line. To scale up to a massive multi-user setup, individual recipients (j1...n), depending on their privacy preferences, available bandwidth, and processing capabilities of the end-user device, are represented through their profile pictures or stylized as simple pictograms conveying only their gender. An example of a suitable representation is given in Figure 3, wherein the viewer (i) himself is highlighted by a magnified stick figure.

Once this step is completed, the virtual venue (A, B, C, D, E, F, G, H1, H2) and audience (i, j1...n) are jointly arranged into what may be called a perceptual scene (A, B, C, D, E, F, G, H1, H2, i, j1...n), tracked, and visualized. A suitable data structure is known in the art as a scene graph and commonly used by vector-based graphics editing applications, so-called game engines, or other libraries capable of composing two-and/or three-dimensional computer graphics. In such application or library, the stage (A), individual facilities (B, C, D, E, F, G, H1, H2), and members of the audience (i, j1...n) of the virtual event would typically be represented by nodes in the underlying graph or tree structure.

The scene (A, B, C, D, E, F, G, H1, H2, i, j1...n) thus created is rendered and continuously re-rendered for output on the GUI's canvas and, ultimately, physical screen, resulting in a complete perspective view of the animate venue (A, B, C, D, E, F, G, H1, H2) with the original main content continuously playing on its stage. Further intensifying the experience of immersion, the GUI enables its user to interact with the virtual environment. For instance, the viewer may be allowed to select a destination among the aforementioned facilities (B, C, D, E, F, G, H1, H2) based on her interests, in response to a sensory stimulus, or acting on the spur of the moment. In reply to this navigation request, the app or back-end would than animate her avatar's retarded motion to the desired area to visually suggest her change of focus onto a certain subject matter associated with that destination.

Similarly, predetermined reference points (k1...n) may be distributed across the scene (A, B, C, D, E, F, G, H1, H2, i, j1...n) and visually tagged, as is exemplified in Figure 4. This way, by clicking or otherwise selecting such point of interest, the user may retrieve supplemental on-line content - for instance, a history or biographical data of the band or artist currently on stage.

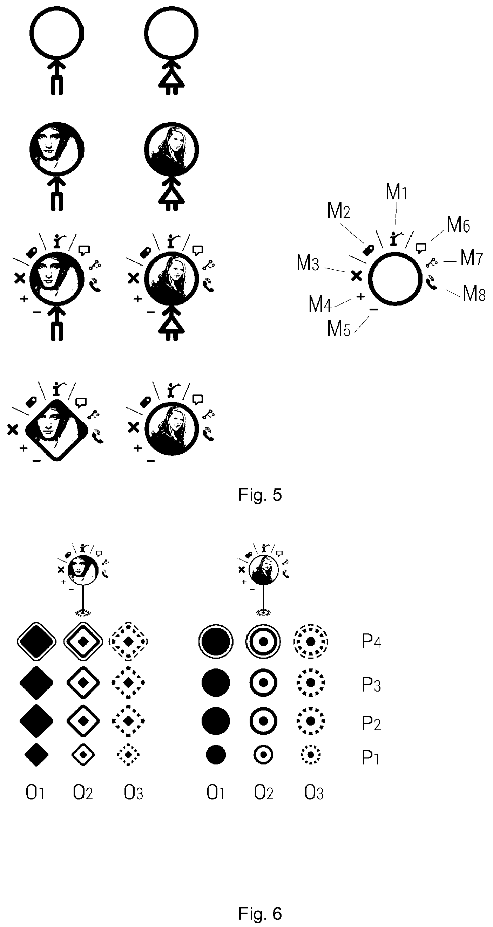

Completing the feel of a live-event experience, the socially inclined user may choose to select a peer among the recipients (j1...n) on screen. To this end, the user interface overlays the rendered scene (A, B, C, D, E, F, G, H1, H2, i, j1...n) with a context menu (M1, M2, M3, M4, M5, M6, M7, M8) associated with the target subject, presenting the user with miscellaneous options for engaging in a dialog, tagging, or otherwise interacting with the elected fellow viewer. Prototypical context menus (M1, M2, M3, M4, M5, M6, M7, M8) of this type are shown - based on various options for representing male and female recipients (j1...n) - in Figure 5. This way, each character on screen effectively serves as a call to action, prompting users to click various targets and thus creating a pattern of collective movement or even crush.

To facilitate social interaction, the scene (A, B, C, D, E, F, G, H1, H2, i, j1...n) visually highlights selected acquaintances and friends among the recipients (j1...n), whose representation is further limited by configurable filters based on age, gender, social interests, degree of familiarity, physical location relative to the viewer (i), or similar criteria. Again distinguishing between male and female co-recipients (j1...n), Figure 6 proposes a suitable graphical notation reflecting social relationship (P1, P2, P3, P4) while differentiating between watchers (O1) of the video feed and physical attendants (02, 03) of the actual live rendition. Concerning the latter, it should be noted that - even while watching the show live on stage - it is possible to access the augmented video feed through one's smartphone or websites to virtually navigate to points of interest or interact with other watchers. Taking this possibility into account, the proposed notation further distinguishes the current physical location of a particular attendant (02) from what may be called her virtual location (03) selected by means of the GUI.

### Industrial applicability

The invention is applicable, *inter alia,* across the entertainment industries, especially for marketing digital contents and rich-media advertising.

### Citation list

The following literature is cited throughout this document.

### Patent literature

US 2011164116 A (DISNEY ENTPR INC [US]) 07.07.2011

### Non-patent literature

MILGRAM, Paul, et al. A Taxonomy of Mixed Reality Visual Displays. - Section J: (D) IEICE trans. inf syst.. December 1994, vol.E77-D, no.12, p.1321-1329.

## Claims

1. Method of computationally augmenting a video feed,
**characterized in**
mapping the video feed onto a virtual stage setting,
spatially modeling a virtual audience (i, j1...n) representing recipients (i, j1...n) of the video feed,
assembling a perceptual scene (A, B, C, D, E, F, G, H1, H2, i, j1...n) comprising the virtual stage setting and audience (i, j1...n), and
rendering the scene (A, B, C, D, E, F, G, H1, H2, i, j1...n) for visual display to a viewer (i) among the recipients (i, j1...n).

2. Method according to Claim 1,
**characterized in that**
the audience (i, j1...n) is modeled such that males among the recipients (j1...n) are represented through a first pictogram while females among the recipients (j1...n) are represented through a second pictogram.

3. Method according to Claim 1 or Claim 2,
**characterized in that**
the scene (A, B, C, D, E, F, G, H1, H2, i, j1...n) is continually re-rendered before, after and/or while the video feed plays on the virtual stage setting (A).

4. Method according to Claim 3,
**characterized in that**
the audience (i, j1...n) is modeled such that some among the recipients (j1...n) are represented through a profile picture.

5. Method according to Claim 4,
**characterized in**
continually displaying the rendered scene (A, B, C, D, E, F, G, H1, H2, i, j1...n) on a canvas of a graphical user interface.

6. Method according to Claim 5,
**characterized in that**,
if the viewer (i) selects a target among the recipients (j1...n) via the user interface, the user interface overlays the rendered scene (A, B, C, D, E, F, G, H1, H2, i, j1...n) with a context menu (M1, M2, M3, M4, M5, M6, M7, M8) associated with the target, wherein the menu comprises options for engaging in an interaction, particularly getting user profile information and/or having a dialog with the target.

7. Method according to Claim 5 or Claim 6,
**characterized in**
further modeling a virtual venue (A, B, C, D, E, F, G, H1, H2) comprising the stage setting (A), wherein the scene (A, B, C, D, E, F, G, H1, H2, i, j1...n) comprises the virtual venue (A, B, C, D, E, F, G, H1, H2).

8. Method according to Claim 7,
**characterized in that**
the venue (A, B, C, D, E, F, G, H1, H2) is modeled by arranging virtual facilities in a predetermined spatial relation to the stage setting (A), particularly an indoor section (B), an outdoor section (C), an entry zone (D), a retail store (E), a backstage (F), a lounge (G), a ladies' room (H1), or a men's room (H2).

9. Method according to Claim 8,
**characterized in that**,
if the viewer (i) selects a destination among the facilities via the user interface, the audience (i, j1...n) is re-modeled such that, upon assembling the scene (A, B, C, D, E, F, G, H1, H2, i, j1...n), the viewer (i) is positioned nearby the destination.

10. Method according to any of Claim 5 to Claim 9,
**characterized in that**
the scene (A, B, C, D, E, F, G, H1, H2, i, j1...n) is rendered such that predetermined reference points (k1...n) are visually marked, and
if the viewer (i) selects one of the reference points (k1...n), the user interface displays content supplementing the video feed.

11. Method according to any of the preceding claims,
**characterized in that**
the audience (i, j1...n) is modeled such that the scene (A, B, C, D, E, F, G, H1, H2, i, j1...n) highlights selected relationships and friends and/or dialogs of the viewer (i) among the recipients (j1...n).

12. Method according to any of the preceding claims,
**characterized in that**
representation of the recipients (j1...n) and/or recipients' profile pictures is limited by configurable filters based on matching aspects like age, gender, social interests, degree of familiarity (P1, P2, P3, P4), physical distance from the viewer (i) or others.

13. Data-processing apparatus comprising means for carrying out the method according to any of the preceding claims.

14. Computer program adapted to perform the method according to any of Claim 1 to Claim 12.

15. Computer-readable storage medium comprising the program according to Claim 14.
